# EUROPEAN PATENT SPECIFICATION

(11) **EP 1 781 710 B1**
(45) Date of publication and mention of the grant of the patent: **23.07.2008**
(21) Application number: 05778649.3
(22) Date of filing: 05.08.2005
(51) Int. Cl.: C08B 37/14, A23L 2/56, A23L 2/39, A23L 1/0534

(54) **EMULSIFIERS FOR CITRUS OILS AND RELATED PRODUCTS**
EMULGATOREN FÜR CITRUSÖLE UND ZUGEHÖRIGE PRODUKTE
EMULSIFIANTS POUR LES HUILES D'AGRUME ET PRODUITS ASSOCIES

(30) Priority: 06.08.2004 US 599412 P
(43) Date of publication of application: 09.05.2007
(73) Proprietor: GRAIN PROCESSING CORPORATION, Muscatine, Iowa 52761-1494 (US)
(72) Inventor: MCPHERSON, Roger, E., Muscatine, IA 52761 (US); OLSON, Robert, L., Muscatine, IA 52761 (US); EADS, Angela, New Boston, IL 61272 (US)
(74) Representative: McCall, John Douglas
(86) International application number: PCT/US2005/027911
(87) International publication number: WO 2006/017744

(56) References cited:
- EP-A- 1 023 842
- PATENT ABSTRACTS OF JAPAN vol. 1997, no. 12, 25 December 1997 (1997-12-25) & JP 09 206022 A (KAGOME CO LTD), 12 August 1997 (1997-08-12)

## Description

### FIELD OF THE INVENTION

This invention relates to emulsions of citrus oils or other essential oils, to encapsulated oils, and to related products. The emulsified or encapsulated oils are useful in the preparation of beverages, such as soft drinks.

### BACKGROUND OF THE INVENTION

Emulsified and encapsulated flavorants are widely used in the food and beverage industries. Gum Arabic provides such properties and offers the advantages of cold water solubility, low viscosity, good stabilization and emulsifying properties, good film formation properties, and quick release of flavors. Thus, gum Arabic has been widely used in the food and beverage industry as a stabilizer and emulsifier to prepare concentrates for beverages and as an encapsulating agent to produce aromas in powdered form.

One particular use of gum Arabic is in the preparation of citrus concentrates for beverages. Citrus concentrates for beverages typically are prepared by dissolving the emulsifier in water to prepare the aqueous phase; adding other ingredients such as carriers, water soluble preservatives, and acidifying agents; mixing with a flavoring oil such as orange oil; and then homogenizing the mixture to reduce the size of oil globules. The resulting liquid citrus oil emulsion can be stored for later dilution and can be used in various products, such as soft drinks.

Gum Arabic is the exudates of a woody plant (acacia) that is grown in politically unstable areas of the world, e.g., the Sudan. The quality of the harvested gum Arabic is variable, and the constancy of the supply is unstable in light of political and climatic factors:

Fluctuating supplies and prices over the years for gum Arabic have forced the industry to look for functional alternatives. Many other natural gums were thus utilized, but such gums generally provided too much viscosity. Several modified starch products that provide good emulsification and good encapsulation have been developed. Such products, while offering good functionality, are often not used in light of labeling requirements that do not meet the expectations and needs of some consumers. Moreover, not all encapsulating agents are satisfactory. Emulsification should provide a stable, uniformly dispersed oil product that can be held and eventually diluted for use. If emulsification is poor, the dispersed oil phase may coalesce, resulting in a white or colored ring at the top of the emulsion or the loss of turbidity at the bottom.

The invention seeks to provide, in some embodiments, an emulsified oil. In other embodiments, the invention seeks to provide an encapsulated oil.

### THE INVENTION

It has now been discovered that hemicellulose, hemicellulose hydrolyzate, and mixtures thereof may be used in the emulsification and encapsulation of essential oil flavorants, in particular citrus oils. Surprisingly, hemicellulose and hemicellulose hydrolyzate, particularly those derived from corn hulls, are more efficient emulsifiers than gum Arabic. Moreover, it was surprisingly discovered that corn hull hemicellulose hydrolyzate provided a higher orange oil recovery and a longer oxidative stability than did gum Arabic.

In accordance with the invention, an aqueous emulsion that comprises a mixture of water, an aromatic or volatile essential oil, and an amount of hemicellulose hydrolyzate effective to produce a stable emulsion is provided. The present invention is further directed to products produced from the emulsion, in particular beverages.

The present invention is further directed to an oxygen stable spray-dried composition that comprises an aromatic or volatile essential oil flavorant encapsulated in a matrix, the matrix comprising an amount of hemicellulose hydrolyzate effective to encapsulate the essential oil flavorant. Also encompassed by the invention are various methods for preparing an aqueous citrus oil emulsion. The invention is further deemed to encompass beverages prepared using such emulsions.

### DETAILED DESCRIPTION OF THE PREFERRED EMBODIMENTS

Hemicellulose may be obtained from a variety of sources, such as corn hulls, cottonseed hulls, peanut hulls, oat hulls, soybean hulls, palm hulls, coconut hulls, and lees from rice, wheat, beets or potatoes. A preferred hemicellulose is corn hull hemicellulose, which is obtained by treatment of corn hulls. The remaining discussion focuses on corn hull hemicellulose, but it should be understood that hemicellulose obtained from other sources may be used as an emulsifier and are within the scope of the instant invention.

The domestic U.S. hybrid corn crop is enormous and stable, and the composition of the corn seeds does not vary significantly. Corn crops provide a reliable, low cost, and consistent source of hulls, bran, and spent germ as byproducts from the production of starch, corn flour, protein and oil. Corn hulls from the corn wet milling industry are a good, inexpensive source of hemicellulose.

Corn hull hemicellulose is one of the naturally occurring biopolymers found within corn seed hulls. More particularly, corn hulls comprise hemicellulose, cellulose, starch, protein, fat, acetic acid, ferulic acid, diferulic acid, coumaric acid, and trace amounts of other materials such as phytosytosterols and minerals. A representative compositional analysis of non-destarched commercially produced corn hulls is as follows (corn bran is expected to have a similar composition):

| | |
|---|---|
| Hemicellulose | 56.38% |
| Cellulose | 18.79% |
| Starch | 8.14% |
| Protein | 7.90% |
| Fat | 1.69% |
| Acetic acid | 3.51% |
| Ferulic acid | 2.67% |
| Diferulic acid | 0.58% |
| Coumaric acid | 0.33% |
| Other | (trace) |

The hemicellulose fraction of plants is composed of a collection of polysaccharide polymers with a typical lower DP (degree of polymerization) than the cellulose in the plant. Corn hull hemicellulose is a highly branched polymer of xylose having side chains comprised of arabinose, galactose, and terminal glucuronic acid. More particularly, hemicellulose contains mostly D-xylopyranose, D-glucopyranose, D-galactopyranose, L-arabinofuranose, D-mannopyranose, and D-glucopyranosyluronic acid, with minor amounts of other sugars. The various forms of hemicellulose and the ratio of hemicellulose to cellulose is not well defined and may vary from plant to plant or from crop to crop within a given plant. Corn hull hemicellulose is completely water soluble.

Hemicellulose or a hemicellulose-containing material may be obtained from the hulls in any suitable manner. The isolation of corn hull hemicellulose from corn hulls is taught in the technical literature and is taught in the following patents: U.S. 2,801,955, U.S. 3,716,526, U.S. 2,868,778, and U.S. 4,038,481. The treatment of corn hull hemicellulose with xylanase to generate corn hull hemicellulose hydrolyzate is taught in U.S. 6,488,754 B2 and 6,179,905.

Generally, the foregoing techniques yield hemicellulose in an aqueous solution. Any aqueous solution of hemicellulose may be employed in conjunction with the invention, but preferably, the hemicellulose solution is that obtained or derived from the soluble component of the alkali digest of cooked corn hulls. This digest typically will include starch (in an amount of 5 to 25%, but generally at least about 5%); protein, hemicellulose, fatty acid salts; glycerin, acetic acid, ferulic acid, diferulic acid, coumaric acid, and trace amounts of other materials such as phytosytosterols and minerals.

Corn hull hemicellulose may be depolymerized to generate corn hull hemicellulose hydrolyzate by any suitable method known in the art or otherwise as may be found to be suitable. The terms "partially depolymerized hemicellulose," and "hemicellulose hydrolyzate" as used herein refer generally to the product obtained when hemicellulose is subjected to a depolymerization reaction under conditions such that a partially depolymerized hemicellulose is obtained. Partial depolymerization of cellulose and hemicellulose are known in the art and can be accomplished, for example, enzymatically or chemically. The depolymerization reaction may be allowed to proceed to any extent suitable to reduce the viscosity of a solution of the hemicellulose relative to the viscosity of an otherwise-similar solution at the same solids content and temperature.

Enzymatic partial depolymerization is described, for example, in U.S. Pat. Nos. 5,200,215 and 5,362,502. Chemical partial depolymerization is described, for example, in R. L. Whistler and W. M. Curbelt, J. Am. Chem. Soc., 77, 6328 (1955). As described in U.S. Pat No. 6,179,975, hemicellulose hydrolyzate may be obtained by hydrolyzing a hemicellulose-containing plant source by heating an alkaline aqueous suspension of said plant source to thereby form a hemicellulose-containing soluble phase and an insoluble phase; substantially separating said hemicellulose-containing soluble phase from said insoluble phase; partially depolymerizing at least a portion of the hemicellulose in said hemicellulose-containing soluble phase to produce a partially depolymerized hemicellulose-containing phase; and optionally separating water from said partially depolymerized hemicellulose-containing phase.

In accordance with a another embodiment of the invention, the partially depolymerized hemicellulose is obtained by the partial depolymerization of a soluble hemicellulose precursor that is substantially completely free of cellulose and other insoluble components from the plant source from which the hemicellulose is obtained, as taught in U.S. Patent No. 6,063,178. As provided in more detail therein, the hemicellulose precursor most preferably is obtained from a soluble phase extracted from hydrolyzed destarched corn hulls produced by the corn wet milling industry.

In accordance with another embodiment of the invention, hemicellulose is removed from the hemicellulose-containing plant source in a soluble phase. Preferably, at least a majority of the hemicellulose component of the plant source, more preferably substantially all of the hemicellulose portion, is separated from insoluble components of the plant source. For example, when the hemicellulose-containing plant source comprises corn hulls, the soluble phase preferably is extracted from the corn hulls. The hemicellulose is extracted by heating an aqueous alkaline slurry of the corn hulls to a temperature of at least about 130°F (54.5°C), more preferably at least about 212°F (100°C), for a time sufficient to extract a substantial portion of the hemicellulose and other soluble components from the corn hulls. When the corn hull slurry is heated to boiling at atmospheric pressure, it has been found that the slurry should be heated with agitation for a time of at least about 60 minutes, more preferably at least about 80 minutes, and most preferably at least about 120 minutes, to extract the hemicellulose. This time may be substantially shortened if the corn hull slurry is cooked at higher temperatures under pressure. For example, com hulls may be cooked at 315°F (157°C) at 482633Pa (about 70 psig) for a time of about 5 minutes. Generally, any other reaction conditions as may be found to be suitable may be employed in conjunction with the invention.

Insolubles, for example, cellulose, are then physically removed from the reaction mixture, for example, by centrifugation. The soluble phase will contain hemicellulose and other soluble components. For example, it is believed that the soluble phase will contain protein hydrolyzate, salts of fatty acids, glycerin, and salts of natural acids, such as ferulic acid and coumaric acid. It should be understood that although the foregoing represents the preferred method of obtaining the hemicellulose precursor, any hemicellulose obtained via any method may be depolymerized and incorporated into a coating composition in connection with the invention.

After the hemicellulose precursor is obtained, the soluble hemicellulose and other soluble components of the corn hulls then may be concentrated, or water may be removed substantially completely, such as by evaporation or spray-drying, to provide a solid hemicellulose-containing soluble phase. The hemicellulose in the hemicellulose-containing soluble phase can then be depolymerized in any suitable manner as described herein, and used in accordance with the present invention. Alternatively, the hemicellulose in the hemicellulose solution may be depolymerized prior to concentration and the resulting product optionally concentrated and used. It is further contemplated that the hemicellulose may be partially depolymerized prior to separation of the hemicellulose in a soluble phase from insoluble portions of a hydrolyzed plant source, although such is not presently contemplated to be preferred.

The hemicellulose can be partially depolymerized by any suitable method known in the art or otherwise as may be found to be suitable. The term "partially depolymerized," as used herein refers generally to the product obtained when hemicellulose is subjected to a depolymerization reaction under conditions such that a partially depolymerized hemicellulose is obtained. The product of partial depolymerization of the hemicellulose has not been characterized with certainty, but it is presently believed that partial depolymerization by enzymatic methods occurs via random enzymatic cleavage.

Preferably, the partial depolymerization reaction is carried out enzymatically, i.e., under enzymatic catalysis. In a preferred embodiment, the hemicellulose is partially depolymerized with a xylanase enzyme, such as a xylanase that is active under acidic pH. In such case, the pH of the hemicellulose-rich soluble phase of the alkaline hydrolyzate typically is undesirably high and should be adjusted to a pH at which the depolymerizing enzyme is active. When a xylanase that is active under acidic conditions is used, the xylanase is preferably one which is active in the hemicellulose-containing soluble phase below about pH 7, and is most preferably active in the hemicellulose-containing soluble phase at about pH 4.8. In a particularly preferred embodiment, the enzyme utilized in the enzymatic partial depolymerization reaction is GC-140 xylanase, which is available from Genencor International, Rochester, New York

Enzymatic partial depolymerization of hemicellulose may be regulated by controlling the reaction conditions that affect the progress of the depolymerization reaction, for example, the enzyme dosage, temperature, and reaction time. Monitoring of the depolymerization reaction can be accomplished by any suitable method known in the art. For example, the rate or extent of depolymerization can be measured on the basis of viscosity, which typically decreases as the average molecular weight of hemicellulose product decreases during the partial depolymerization reaction. The viscosity (or the rate of change of viscosity over time) can be measured with a viscometer, for example, the rapid viscometer marketed by Foss Food Tech. Corp., Eden Prairie, Minnesota. When a rapid viscometer is used to measure viscosity, it is preferably measured at 25°C after the solution is allowed to equilibrate thermally for about 15 minutes.

Any enzyme dosage (weight of enzyme relative to the overall weight of solution) as may be found to be suitable for depolymerizing the hemicellulose may be used in connection with the invention. For example, in one embodiment xylanase enzyme is used at a dosage ranging from about 0.1 g to about 0.3 g of xylanase per about 5000 g of hemicellulose solution obtained from a plant source. It will be appreciated that the rate and/or the extent of depolymerization achieved at one enzyme dosage can be increased by using a relatively higher enzyme dosage. In this regard, the reaction time required to achieve partial depolymerization is inversely proportional to the enzyme dosage. It will also be appreciated that the enzymatic partial depolymerization reaction can exhibit a "plateau," during the course of the enzymatic partial depolymerization reaction at which the average molecular weight of the partially depolymerized hemicellulose (as evaluated, for example, by viscosity measurements) does not substantially continue to decrease as the reaction continues. Typically, the plateau is preceded by a relatively rapid initial rate of partial depolymerization. It has been found, for example, that the partial depolymerization of a soluble phase hemicellulose solution having an initial viscosity of 290 cp (measured with a rapid viscometer) exhibited a plateau at a viscosity of about 199 cp when the enzyme dosage was 0.1288 g enzyme per 5000 g of hemicellulose solution (9.4% solids). However, when an enzyme dosage of 0.2542 g enzyme per 5000 g of solution was employed under similar conditions the reaction exhibited a plateau at a solution viscosity of about 153 cp. It will thus be appreciated that a particular enzymatic reaction may reach a plateau at a different average molecular weight depending on the enzyme dosage or on the particular enzyme used. Preferably, the enzymatic partial depolymerization is allowed to proceed until the plateau is reached.

The reaction may proceed at any suitable temperature. For example, when GC-140 xylanase (commercially available from Genencor International, Rochester, N.Y.) is used, the temperature is most preferably about 59°C, and the reaction time is most preferably about 4 hours when the xylanase dosage ranges from about 0.1 g to about 0.3 g of xylanase per about 5000 g of reaction solution. The enzymatic reaction can be terminated by any suitable method known in the art for inactivating an enzyme, for example, by adjusting the pH to a level at which the enzyme is rendered substantially inactive; by raising or lowering the temperature, as may be appropriate, or both. For example, xylanases that are active at acidic pH's can be inactivated by raising the pH to about 7.2 and simultaneously raising the temperature to about 90°C.

The depolymerization of the hemicellulose may proceed to any suitable extent. Generally, it is desired that the partially depolymerized hemicellulose will still have a film-forming property. It is desired to partially depolymerize the hemicellulose in conjunction with the invention to achieve a lower viscosity than that of an otherwise similar hemicellulose, as evaluated in an aqueous solution at the same solids content and temperature. Hemicellulose derived from corn often have a molecular weight in the range of 220,000 Daltons; it is believed that partial depolymerization of this material to an average molecular weight of 70,000 Daltons will provide a partially depolymerized hemicellulose that is suitable for use in conjunction with the invention. In some embodiments of the invention, the hemicellulose may be partially depolymerized to a greater or lesser extent.

In accordance with the invention, hemicellulose hydrolyzate is used for emulsification and encapsulation of citrus oils or other essential oils. The invention is deemed to find particular applicability in the field of essential oil flavorants. If a mixture of hemicellulose or hemicellulose hydrolyzate is employed, any ratio of hemicellulose to hemicellulose hydrolyzate may be employed.

Aromatic or volatile essential oil flavorants include citrus oils, e.g. lemon oil; orange oil, grapefruit oil and other volatile flavorants, such as bakery and savory flavorants. The remaining discussion focuses on citrus oils, but it should be understood that other essential oils may be used and are within the scope of the instant invention. The citrus oil may be present in the emulsion in any amount desired. When an oil flavorant is used, the oil should be present in an amount effective to achieve the desired concentration of flavorant. Typical values include about 5 to about 40 wt %, preferably about 10 to about 20 wt %, based on the total weight of the composition.

In accordance with the invention, aqueous emulsions are prepared with hemicellulose hydrolyzate and a citrus oil by dissolving the hemicellulose or hemicellulose hydrolyzate in water to form an aqueous phase. A citrus oil is mixed into the hemicellulose hydrolyzate. The mixture is then homogenized to reduce the size of oil globules. The hemicellulose hydrolyzate may be present in any amount effective to emulsify the oil: Typical ranges are from about 1 to about 15 wt% based on total weight of the emulsion, preferably about 3 to about 5 wt%.

Other ingredients, such as carriers, water soluble preservatives, and acidifying agents may be employed. Suitable carriers include but are not limited to maltodextrin and hydrogenated starch hydrolyzates. Suitable preservatives include, but are not limited to, sodium benzoate, potassium sorbate, erythorbic acid, EDTA, and calcium disodium EDTA. These ingredients may be present in any amounts effective for their intended purposes. Suitable acidifying agents include citric acid. Acidifying agents are added to provide a pH of the resulting mixture of about 3 to about 4, preferably about 3.6.

Other ingredients include weighting agents such as sucrose acetate isobutyrate (SAIB.) Weighting agents are used to prevent "ringing" in beverages. Generally they are ingredients that bring the density of the citrus oils close to that of water so that beverage mixtures remain stable.

The emulsion may be prepared in any suitable manner. In one embodiment, the hemicellulose hydrolyzate is mixed with a citrus oil and then heat treated, preferably at a temperature of about 75-85° C. An acidifying agent is then added to reduce the pH, preferably to about 3 to about 4, more preferably about 3.6. Heating aids in dispersion and denaturation and provides pasteurization if desired.

The emulsion is preferably prepared using the hemicellulose hydrolyzate and the oil, and optionally other ingredients. In preferred embodiments, the emulsion had a viscosity below about 220 cP, more preferably below about 150 cP, and more preferably below about 120 cP. (Brookfield, No. 2 spindle, room temperature, 100 rpm).

The emulsion may be spray dried to form encapsulated citrus oil particles. For proper spray drying, the citrus oil emulsion is typically prepared at close to 50% solids with a 20% citrus oil based on total solids, and a suitable carrier comprising 80% of the solids. One suitable carrier is maltodextrin M100® sold by Grain Processing Corporation of Muscatine, Iowa. Generally, any suitable amounts of carrier, emulsifier, and oil may be used. In some embodiments, the invention is deemed to encompass methods for spray drying. With proper encapsulation, the citrus oil is protected from oxidation during storage and transport.

The citrus oil emulsion or spray dried composition may be used for any suitable purpose: It is contemplated that the emulsion may be used to prepare beverages such as soda, fruit drinks, flavored waters, and the like. Typically, the emulsion or spray dried composition is added to water to produce a composition. For example, a product is produced containing 5 to 15% emulsion and other ingredients such as water. A typical beverage drink may have hemicellulose or hemicellulose hydrolyzate in amounts of from about 0.1 to about 0.5 wt% of the total weight of the emulsion, or about 0.1 to about 0.4 wt% or about 0.1 to about 0.3 wt%.

Other ingredients may be added to produce the desired beverage or food product such as sodium, sugar, flavorings, preservatives, colorants, other gums such as gum acacia or gum ghatti, and the like.

For example the emulsion or spray dried composition may be blended with carbonated water and a sweetener to produce a soda-type drink. Depending on the type of soda, other ingredients may be added including, but not limited to, fruit juice such as grapefruit, pineapple, orange, apple, passionfruit, and blends thereof; caffeine; preservatives such as EDTA and sodium benzoate; and/or colorants such as caramel color and various food safe dyes. Some of the foregoing ingredients may be deemed flavorings within the purview of the invention.

Alternatively, the emulsion or spray dried composition may be blended with water and fruit juice to produce a fruit drink. The "juice" of a fruit is contemplated to be liquid portion of a fruit that is obtained from the fruit by suitable expression or squeezing. Synthetic juices also may be provided and used in conjunction with the invention. Examples of fruit juices include grapefruit, pineapple, orange, apple, passionfruit, papaya, and blends thereof. Depending on the type of fruit drink, other ingredients may be added including, but not limited to, sweeteners, preservatives, or other additives such as pectin, ascorbic acid, or colorants. Fruit drinks may be concentrated or spray dried to form a powder to sell as a powder drink where the customer adds water and optionally sugar or other sweetener.

Suitable sweeteners may be incorporated into the beverages in accordance with the invention. Sweeteners include sucrose, glucose, fructose and corn syrups, such as high fructose corn syrup. High potency sweeteners include aspartame, salts and complexes of aspartame, aminoacyl sugars, saccharin, sucralose, alitame, acesulfame K, thaumatin, steveoside and the like. The sweetener may be present in any amount effective to impart a sweet taste to the product. When a natural sweetener such as glucose, fructose, or sucrose is employed, typical amounts range in amounts from about 10 to 25% by total weight. Artificial sweeteners often are significantly more potent and in such should be used in lesser amounts (based on the active sweetener molecule).

In preparing beverages or food products, either a liquid emulsion or a spray-dried, encapsulated oil may be added to other food and beverage ingredients in any suitable amounts.

The following examples are provided to illustrate the invention, but should not be construed as limiting the scope of the invention.

**Example 1**

Acid-Hydrolyzed Hemicellulose

Dried corn hulls from a corn wet milling process of US Number 2 grade hybrid yellow dent corn were ground to a particle size suitable for jet cooking. The ground corn hulls, 159.94 kg (346 pounds) as-is basis, were mixed with 1816.99 liters (480 gallons) of water to form a slurry. NaOH (50%) was added (800 mL) to the slurry in order to achieve a pH of 6. 6 at 21.1°C (70°F).

The resulting slurry was continuously jet-cooked in a continuous jet cooker equipped with a Hydroheater Combining Tube which inflicted high shear into the slurry at the point of contact with the high pressure steam at about 1034214 Pa (about 150 psig). The jet-cooking conditions were: Temperature: 104.4 to 107.2°C (220°F to 225°F); Pressure: about 1516847 Pa (about 220 psig); Retention Time: 4.5 minutes.

The cooked corn hulls were recovered from the cooked slurry by feeding the cooked slurry across a DSM Screen at high pressure. The DSM filtered cooked corn hulls were added to a well-agitated tank of 1362.74 liters (360 gallons) of water at 82.2°C (180°F).

The cooked corn hulls were recovered a second time from the slurry at 82.2°C (180°F) by feeding the slurry at 82.2°C (180°F) across a DSM Screen at high pressure. The DSM filtered cooked corn hulls were added to a well-agitated tank of 1362.74 liters (360 gallons) of water at 1362.74 liters (180°F).

The cooked corn hulls were recovered a third time from the slurry at 180°F by feeding the slurry at 82.2°C (180°F) across a DSM Screen at high pressure. The DSM filtered cooked corn hulls were added to a well-agitated tank of 1362.74 liters (360 gallons) of water at 82.2°C (180°F).

Calcium Hydroxide (40 pounds) was added to the well-agitated slurry. The resulting slurry was continuously jet-cooked in a continuous jet cooker with a Hydroheater Combining Tube which inflicted high shear into the slurry at the point of contact with high pressure steam at about 1034214Pa (about 150 psig). The jet-cooking conditions were: Temperature: 162.7 to 168.3°C (325°F to 335°F); Pressure: about 655001.9 Pa (about 95 psig); Retention Time 27 minutes.

The resultant cooked paste was jet-cooked a second time with high pressure steam at ~1034214 Pa (about 150 psig). The jet-cooking conditions were: Temperature: 162.7°C to 168.3°C (325°F to 335°F); Pressure about 655001.9 Pa (about 95 psig); Retention Time: 30 seconds.

The solubilized, extractable hemicellulose was separated from the remaining insoluble material by centrifugation with a Sharples P-660 centrifuge. The hemicellulose solution (or "overs") was pumped to a continuously stirred tank reactor where hydrogen peroxide was continuously added. The residence time in the reactor at 82.2°C to 87.7°C (180°F to 190°F) was 90 minutes.

The bleached hemicellulose solution was pumped to a continuously stirred tank reactor where hydrochloric acid was continuously added in order to maintain a pH value of 4.0. The residence time in the reactor at 71.12°C to 76.6°C (160°F to 170°F) was 90 minutes.

The acid-hydrolyzed, bleached hemicellulose solution was pumped to a continuously stirred tank reactor and cooled to 26.6°C to 32.2°C (80°F to 90°F) where sodium metabisulfite was added in order to neutralize residual oxidant. Magnesium silicate, "Haze-Out", was added at a rate of 0.34 kg (0.75 pounds) per 378.54 liters (100 gallons) of solution, and calcium hydroxide was added to adjust the pH of the mixture to 7.0. The mixture was filtered across a Rotary Vacuum Filter which had been precoated with the filter aid, "Celite 503".

Magnesium silicate, "Haze-Out", was again added to the filtrate at a rate of 0.34 kg (0.75 pounds) per 378.54 liters (100 gallons) of solution, and the mixture was filtered across a Niagra Filter Press whih had been precoated with the filter aid, "Celite 503" over polypropylene filter pads having porosity of 1 - 3 µ.

The filtrate was then passed through a 5µ filter and temperature adjusted to 48.8°C to 54.4°C (120-130°F) before entering an ultrafiltration unit with a 10,000 molecular weight cut-off membrane. The retentate was diafiltered to a conductivity of 700 microSiemens and then spray dried.

**Example 2**

Orange oil emulsions were prepared using the following procedure.
1. The amount of dry emulsifier specified in the table below was combined with 500g water, and 1 g sodium benzoate (a preservative.)
2. Some solutions were heat treated at 80° C for 30 minutes as noted.
3. The solutions were allowed to stand at room temperature overnight.
4. The solutions were adjusted to pH 3.6 using citric acid.
5. The total solution weight was adjusted to 900g by the addition of more water.
6. 100g of orange oil was added and the mixture was homogenized with a Manton-Gaulin pilot homogenizer.
7. The homogenized samples were held at room temperature and observed for oil separation or other appearance changes such as a white ring.

The tabulated data below show that corn hull hemicellulose hydrolyzate provided stable emulsions and allowed for lower usage levels than the gum Arabic.

**Table 1**

| Observation of liquid orange oil emulsions prepared with gum Arabic, corn hull hemicellulose, or corn hull hemicellulose hydrolyzate | | | | | | |
|---|---|---|---|---|---|---|
| EMULSIFIER | GRAMS | HEAT TREATMENT | VISCOSITY (CP) | OBSERVATIONS | | |
| | | | | 1-DAY | 1-WEEK | 2-WEEKS |
| Corn Hull Hemicellulose Acid Hydrolyzate of Example 1 | 50 | No | 214 | Good | Good | Good |
| Com Hull Hemicellulose Acid Hydrolyzate of Example 1 | 50 | Yes | 208 | Good | Good | Good |
| Corn Hull Hemicellulose Acid Hydrolyzate of Example 1 | 40 | No | 144 | Good | Trace Oil Separation | Trace Oil Separation |
| Com Hull Hemicellulose Acid Hydrolyzate of Example 1 | 40 | Yes | 146 | Good | Good | Good |
| | | | | | | |
| Gum Arabic (comparative) | 150 | No | 99 | Good | Good | White Ring |
| Gum Arabic* (comparative) | 150 | Yes | 96 | Good | Trace Oil Separation White Ring | Trace Oil Separation White Ring |

| | | | | | | |
|---|---|---|---|---|---|---|
| *Gum Technology Coyote Brand Spray Dried Gum Arabic "S" | | | | | | |

**Example 3**

Spray dried emulsion test systems commonly utilize orange oil. Analytical determination of limonene oxide provides a good test of oxidative stability.

Syrups were prepared using either gum Arabic or corn hull hemicellulose hydrolyzate in combination with maltodextrin (MALTRIN® M100, Grain Processing Corp., Muscatine, IA) or related carriers such as polyglycitol hydrogenated starch hydrolyzate (STABILITE® SD-60, Grain Processing Corp., Muscatine, IA) in a ratio of 1 part gum solids to 9 parts carrier. Solids contents were adjusted to give a Brookfield viscosity of 200 to 400 cP (Brookfield, No. 2 spindle, room temperature, 100rpm). Orange oil was added to give a 20% oil load based on solids, and an emulsion was formed using a Manton-Gaulin two-stage homogenizer. The emulsions were then spray dried using a Bowen pilot spray dryer, and evaluated for limonene oxide.

Test results are given in Table 2. In this test, the corn hull hemicellulose hydrolyzate had a higher orange oil recovery and a longer oxidative stability than did the gum Arabic sample. The corn hull hemicellulose hydrolyzate was superior to gum Arabic.

**Table 2**

| Evaluation of spray dried orange oil emulsions prepared with gum Arabic or corn hull hemicellulose hydrolyzate | | | | |
|---|---|---|---|---|
| Gum Used (1 part) | Carrier Used (9 Parts). | Gum & Carrier Syrup Viscosity (cP) | Orange Oil Recovery* | Oxidative Stability (Days)** |
| Gum Arabic¹ (comparative) | MALTRIN® M100 | 369 | 70% | 23.8 |
| Gum Arabic¹ (comparative) | STABILITE® SD-60 | 333 | 82% | 19.8 |
| Corn Hull Hemicellulose Xylanase Hydrolyzate | MALTRIN® M100 | 342 | 92% | 29.7 |
| Com Hull Hemicellulose Xylanase Hydrolyzate | STABILITE® 60 | 215 | 89% | 37.0 |

| | | | | |
|---|---|---|---|---|
| ¹ EMULGUM, Colloides Naturales, Inc., Bridgewater, NJ. * Orange Oil recovered in spray dried product ** Time for limonene oxide to increase by 2.0 mg/g orange oil. | | | | |

### Example 4

Two soft drinks are prepared by blending the spray-dried products of Example 3 with water and sugar.

**Example 5**

The hydrolyzed cornhull hemicellulose of example 1 was used at higher hemicellulose to citrus oil ratios than example 2. A higher loading ratio did not produce the desired stable emulsion. The hydrolyzed cornhull hemicellulose (HCH) was compared against Gum Arabic and Starch (Purity Gum). Cold-pressed orange oil and SAIB (sucrose acetate isobutyrate) weighting agent were also used.

**Emulsion Concentrate Formulas**

| Ingredient (%) | Purity Gum comp | | Gum Arabic comp | | HCH Gum 1 | | HCH Gum 2 | |
|---|---|---|---|---|---|---|---|---|
| Carbohydrate | 25 | 25 | 25 | 25 | 8.5 | 8.5 | 12.5 | 12.5 |
| Orange Oil | 10 | 10 | 10 | 10 | 10 | 10 | 10 | 10 |
| SAIB | 0 | 10 | 0 | 10 | 0 | 10 | 0 | 10 |
| Water | 65 | 55 | 65 | 55 | 81.5 | 71.5 | 77.5 | 67.5 |

**Beverage Emulsion Formula**

| Ingredient | % |
|---|---|
| Emulsion Concentrate | 10 |
| Sucrose | 8.5 |
| Sodium Benzoate | 0.1 |
| Water | 81.4 |

The gums and starch were dispersed in ambient temperature water using a high shear mixer at 70% power until no clumps remained, approximately 15 minutes per sample. The HCH gums were heated to 80°C for 30 minutes. All gum solutions were covered and left at ambient temperature overnight. SAIB was dispersed in orange oil and held overnight.

The following day, viscosity of the solutions was measured using a Brookfield viscometer. The pH was checked on each solution and the pH of the HCH solutions was adjusted to 3.6 using 2M citric acid. pH of the Purity Gum and gum Arabic mixtures were also adjusted down slightly. Viscosity was then rechecked.

Concentrated emulsions were then made by dispersing the orange oil (with or without SAIB) into the carbohydrate solutions using a high-shear mixer set at 100% for three minutes. Beverage emulsions were then made from the concentrates by diluting the concentrates in the solution of sugar and sodium benzoate and dispersing using a high-shear mixer set at 100% for three minutes.

Concentrates and beverage emulsions were poured into 250ml polyester bottles and tightly capped. Samples were then placed in four temperature conditions, 5°C, 25°C, 35°C and 45°C.

Emulsion droplet size was determined using laser light scattering (Malvern Mastersizer S with small volume liquid dispersion unit, particle size range 0.5µ to 900µ). Products also were inspected weekly for phase separation and ringing.

The HCH carbohydrate mixtures separated into two phases overnight following initial dispersion, prior to pH adjustment. There was significant flocculation of the HCH products after 12 hours and they would not disperse with gentle stirring. However, they did appear to stay dispersed after pH was adjusted to 3.6.

The high shear mixer was used both for dispersion of carbohydrate and also for homogenization of the emulsions. The Purity Gum was quite difficult to disperse and the emulsion entrained a large amount of air. The foam was quite stable and collapsed very slowly. Gum Arabic and the HCH gums were easier to disperse and the volume changed much less when dispersed with the high shear mixer.

Sample viscosity was measured one day after the carbohydrates were dispersed in water and prior to addition of the flavor. Viscosity of samples either remained the same or decreased slightly when pH was adjusted.

| Sample | Initial pH | Adjusted pH | Initial Viscosity (cps) | Adjusted Viscosity (cps) |
|---|---|---|---|---|
| Purity Gum | 3.93 | 3.88 | 37.2 | 43.4 |
| Purity Gum-S | 3.95 | 3.88 | 96.9 | 79.8 |
| Gum Arabic | 4.42 | 4.20 | 16.6 | 16.9 |
| Gum Arabic-S | 4.50 | 4.20 | 32.2 | 35.4 |
| HCH Gum 1 | 7.50 | 3.60 | 23.0 | 19.0 |
| HCH Gum 1-S | 7.50 | 3.60 | 58.5 | 30.7 |
| HCH Gum 2 | 7.20 | 3.60 | 76.0 | 72.6 |
| HCH Gum 2-S | 7.23 | 3.60 | 147.0 | 129.0 |

Initially, all products were uniformly opaque mixtures. After four days, there was visible "necking" or concentration of the orange oil in the neck of the bottle for many of the unweighted concentrated and beverage emulsions. There was less visible separation with the weighted samples. All HCH beverage emulsions (weighted and unweighted) showed some degree of necking. The weighted Purity-Gum and gum Arabic samples appeared to be better dispersed at day 1, relative to the HCH samples. Temperature affected the Purity Gum samples the most. The 45° Purity Gum concentrates were clearly broken, with a clear lower phase and a white opaque upper phase. Day four results shown in the following table.

| | | PG | GA | HCH-1 | HCH-2 | PG-S | GA-S | HC-1-S | HCH-2-S |
|---|---|---|---|---|---|---|---|---|---|
| 5°C | Concentrate | 0 | 0 | 0 | 0 | 0 | 0 | 0 | 0 |
| | Beverage | + | + | ++ | ++ | 0 | 0 | + | + |
| 25°C | Concentrate | 0 | 0 | 0 | 0 | 0 | 0 | 0 | 0 |
| | Beverage | + | + | ++ | ++ | 0 | + | ++ | + |
| 35°C | Concentrate | + | 0 | ++ | ++ | + | 0 | + | + |
| | Beverage | ++ | ++ | ++ | ++ | 0 | + | ++ | ++ |
| 45°C | Concentrate | +++ | ++ | ++ | ++ | +++ | 0 | ++ | ++ |
| | Beverage | ++ | ++ | ++ | ++ | 0 | ++ | ++ | ++ |

| | | | | | | | | | |
|---|---|---|---|---|---|---|---|---|---|
| 0, no separation +, slight separation ++, distinct separation +++, broken - clear bi- or triphasic separation | | | | | | | | | |

Beverage emulsion droplet size was measured one day after the emulsions were produced. Emulsion concentrate droplet size was measured four days after the emulsions were produced. All measurements for day 1 and day 4 were made on the 25°C samples. The numbers presented below are the droplet size that was ≤ 50% of the total droplet volume.

Initial emulsion droplet size range varied by matrix. All four unweighted emulsion concentrates showed a single peak that was less than 3µ. However, the range in the droplet size was much broader for the unweighted HCH samples relative to Purity Gum and gum arabic. Weighting the Purity Gum emulsion concentrate tightened up the droplet range, but did not seem to have much effect on gum arabic. However, the weighted HCH products showed a clear bimodal distribution and the mean particle size was much larger, beyond the range of a stable emulsion, i.e. <5µ.

**Emulsion Concentrates @ 25 °C (Day 4)**

| 50% Volume Distribution (µ) | PG | GA | HCH-1 | HCH-2 | PG-S | GA-S | HCH-1-S | HCH-2-S |
|---|---|---|---|---|---|---|---|---|
| Concentrate (day 4 ambient) | 0.97 | 1.58 | 2.44 | 2.58 | 0.71 | 1.05 | 9.63 | 11.87 |

The beverage emulsions showed a similar story to the emulsion concentrates. However, the differences were not as great. All beverage emulsions (weighted and unweighted) had a mean droplet size of ≤ 3µ. However the unweighted HCH beverage emulsions had a clear bimodal distribution. All the weighted beverage emulsions showed only one peak. The droplet size of the weighted HCH beverage emulsions was clearly larger than the weighted Purity Gum and gum Arabic samples.

**Beverage Emulsions @ 25 °C (Day 1)**

| 50% Volume Distribution (µ) | PG | GA | HCH-1 | HCH-2 | PG-S | GA-S | HCH-1-S | HCH-2-S |
|---|---|---|---|---|---|---|---|---|
| Beverage (day 1 ambient) | 1.73 | 1.41 | 3.10 | 2.52 | 0.75 | 1.22 | 2.16 | 2.28 |

Visual observations at Day 11 were similar to Day 4. Only the 5° concentrates had no visible separation. However, separation did not appear much more extreme at day 11 compared to those samples that showed separation at day 4.

| | | PG | GA | HCH-1 | HCH-2 | PG-S | GA-S | HCH-1-S | HCH-2-S |
|---|---|---|---|---|---|---|---|---|---|
| 5°C | Concentrate | 0 | 0 | 0 | 0 | 0 | 0 | 0 | 0 |
| | Beverage | ++ | ++ | ++ | ++ | 0 | ++ | ++ | ++ |
| 25°C | Concentrate | 0 | 0 | ++ | ++ | 0 | 0 | 0 | 0 |
| | Beverage | ++ | ++ | ++ | ++ | ++ | ++ | ++ | ++ |
| 35°C | Concentrate | +++ | 0 | ++ | ++ | +++ | 0 | ++ | ++ |
| | Beverage | ++ | ++ | ++ | ++ | 0 | ++ | ++ | ++ |
| 45°C | Concentrate | +++ | 0 | ++ | ++ | +++ | 0 | 0 | ++ |
| | Beverage | 0 | ++ | ++ | ++ | 0 | ++ | ++ | ++ |

| | | | | | | | | | |
|---|---|---|---|---|---|---|---|---|---|
| 0, no separation +, slight separation ++, distinct separation +++, broken - clear bi- or triphasic separation | | | | | | | | | |

Concentrate and beverage emulsion droplet size was measured on Day 11. Midpoint emulsion droplet size was below 1.7µ for all Purity Gum and gum arabic concentrate and beverage emulsion samples measured. Emulsion droplet size of all HCH concentrates was greater than 5µ, except for the unweighted, low concentration HCH sample @ 25°C (unweighted 5°C samples were not measured), indicating that the emulsion concentrates are not stable. However, the midpoint of weighted HCH beverage emulsions were much closer in droplet size to the Purity Gum and gum arabic beverage emulsions.

This is a strong indication that the HCH beverage products can form relatively stable emulsions, at much lower oil-phase concentration than their Purity Gum or gum arabic counterparts.

| 50% Volume Distribution (µ) | | PG | GA | HCH-1 | HCH-2 | PG-S | GA-S | HCH-1-S | HCH-2-S |
|---|---|---|---|---|---|---|---|---|---|
| 5°C | Concentrate | | | | | | | 10.52 | 13.49 |
| | Beverage | | 1.64 | 3.03 | 1.65 | | 1.41 | 2.01 | 2.17 |
| 25°C | Concentrate | 1.01 | 1.51 | 2.34 | 12.51 | 0.68 | 1.03 | 9.41 | 12.84 |
| | Beverage | 1.50 | 1.10 | 6.86 | 28.81 | 0.64 | 1.10 | 1.54 | 1.66 |
| 35°C | Concentrate | Sep | | | | Sep | 1.05 | 5.01 | |
| | Beverage | | | | | 0.84 | 1.36 | 5.92 | 2.03 |
| 45°C | Concentrate | Sep | | | | Sep | 1.30 | 9.77 | |
| | Beverage | | | | | 0.80 | 1.35 | 1.79 | 2.22 |

| | | | | | | | | | |
|---|---|---|---|---|---|---|---|---|---|
| Sep = separated | | | | | | | | | |

Droplet size of both the Purity Gum and gum arabic emulsion concentrates (weighted and unweighted) did not change between the two time points. Indeed, the weighted HCH concentrates did not change with time as they were broken at the day 4 reading. However there were some significant changes in droplet size for the high concentration unweighted HCH concentrate. The droplet size shifted to the same bimodal distribution as the weighted HCH concentrates.

In the unweighted beverage emulsions, the bimodal distribution became more extreme with time. However, droplet size in the weighted beverage emulsions appears relatively stable.

Droplet size of unweighted concentrates and beverage emulsions over temperature was not measured because none appeared stable. Increasing temperature had a very slight effect on weighted Purity Gum and gum arable concentrates and beverage emulsions. It appears there is a slow rate of increase in droplet size with increasing temperature. In the HCH concentrates, there was no change in droplet size with increasing temperature as the products appear to have broken before the day 4 measurements.

The weighted HCH beverage emulsions did show a change with temperature. As the temperature increased, the droplet size range broadened and a bimodal distribution begins to appear.

Visual observations at Day 28 were similar to Day 11, except separation was seen in the unweighted HCH concentrate at 5°C. The weighted Purity Gum concentrate at 25°C also had broken, following the trend seen in the 35°C concentrate at day 11 and the 45°C concentrate at 4 days. Other than these differences, separation did not appear much more extreme at day 28 than what was observed at day 4.

| | | PG | GA | HCH-1 | HCH-2 | PG-S | GA-S | HCH-1-S | HCH-2-S |
|---|---|---|---|---|---|---|---|---|---|
| 5°C | Concentrate | 0 | 0 | ++ | 0 | 0 | 0 | 0 | 0 |
| | Beverage | ++ | ++ | ++ | ++ | 0 | + | ++ | ++ |
| 25°C | Concentrate | 0 | 0 | ++ | ++ | +++ | 0 | 0 | 0 |
| | Beverage | ++ | ++ | ++ | ++ | 0 | ++ | ++ | ++ |
| 35°C | Concentrate | +++ | 0 | ++ | ++ | +++ | 0 | ++ | +++ |
| | Beverage | 0 | ++ | ++ | ++ | 0 | 0 | ++ | ++ |
| 45°C | Concentrate | +++ | 0 | +++ | +++ | +++ | 0 | +++ | +++ |
| | Beverage | 0 | 0 | ++ | + | 0 | 0 | ++ | ++ |

| | | | | | | | | | |
|---|---|---|---|---|---|---|---|---|---|
| 0, no separation +, slight separation ++, distinct separation +++, broken - clear bi- or triphasic separation | | | | | | | | | |

Emulsion droplet size was measured only on weighted samples as unweighted samples had already been seen to be unstable. Only the weighted gum Arabic concentrates and beverage emulsions were measured at every temperature. They demonstrate good stability across the temperature range with droplet size appearing to be slightly smaller for the concentrate compared to the beverage emulsion. This may be because the higher viscosity of the concentrate slowed droplet coalescence. The weighted Purity Gum beverage samples have maintained excellent stability with droplet size not changing over time or over temperature. Droplet size of the weighted HCH beverage emulsions is somewhat larger than the gum Arabic samples. However, the droplet size of the weighted HCH concentrates is greater than 8µ, indicating that the emulsion has broken.

**Midpoint Emulsion Droplet Size**

| 50% Volume Distribution | | PG-S | GA-S | GPC-1-S | GPC-2-S |
|---|---|---|---|---|---|
| 5°C | Concentrate | | 1.05 | | |
| | Beverage | 0.83 | 1.33 | 1.83 | 1.91 |
| 25°C | Concentrate | | 1.07 | 8.51 | 10.88 |
| | Beverage | 0.84 | 1.09 | 2.72 | 2.68 |
| 35°C | Concentrate | | 1.06 | | |
| | Beverage | 0.84 | 1.53 | 1.75 | 2.15 |
| 45°C | Concentrate | | 1.19 | | |
| | Beverage | 0.85 | 1.44 | 1.82 | 1.87 |

Weighted gum arabic concentrate showed excellent stability over one month. Droplet size has not greatly changed over the time period. The weighted HCH concentrates - appear to have broken within the first four days and did not change over the same time period.

The beverage emulsions started to show shifts to larger droplet size over 28 days. Gum arabic started to show some larger droplet sizes, but it was still relatively stable. However, the HCH beverage emulsions shifted more rapidly to a broken emulsion, with a bimodal distribution clearly apparent.

The study shows that the HCH carbohydrates did not act effectively as emulsifiers under the current conditions. Even at relatively low orange oil concentration (beverage emulsion) the emulsion droplet size continued to grow with time and with elevated temperature. This may be because the carbohydrate to flavor load was not held constant. The Purity Gum and Gum Arabic emulsion concentrates held load:carbohydrate constant at 40%. The HCH loads were 80% and 117% for the high and low HCH concentration emulsions, respectively. This difference in load was carried through to the beverage emulsions, as they were simply a 10% concentration of the concentrates.

It is thus seen that partially depolymerized hemicellulose, are useful in encapsulating oils and in forming emulsions. The encapsulated oils and emulsions are useful in the preparation of foods and beverages.

While the invention has been described with respect to specific examples including presently preferred modes of carrying out the invention, those skilled in the art will appreciate that there are numerous variations and permutations of the above described systems and techniques. For instance, the invention has been described primarily in contemplation of the preparation of beverages containing citrus oil emulsions, but the invention is deemed equally applicable in the context of other essential oil flavorants and products other than beverages such as soups.

All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention. No language in the specification should be construed as indicating that any non-claimed element is essential to the practice of the invention.

Preferred embodiments of this invention are described herein, including the best mode known to the inventors for carrying out the invention. Variations of those preferred embodiments may become apparent to those of ordinary skill in the art upon reading the foregoing description. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An aqueous emulsion comprising a mixture of water, an aromatic or volatile essential oil flavorant, and an amount of hemicellulose hydrolyzate to produce a stable emulsion.

2. An emulsion as claimed in claim 1, wherein the pH of the emulsion is about 3 to about 4.

3. An emulsion as claimed in claim 1, wherein the hemicellulose hydrolyzate comprises about 1 to about 15 wt% of the total weight of the emulsion.

4. An emulsion as claimed in claim 3, wherein the hemicellulose hydrolyzate comprises about 3 to about 5 wt% of the total weight of the emulsion.

5. An emulsion as claimed in claim 4, wherein the citrus oil comprises about 10 to about 20 wt% of the total weight of the emulsion.

6. An emulsion as claimed in claim 1, wherein the emulsion has a viscosity of less than about 150 cP.

7. An emulsion as claimed in claim 6, wherein the viscosity is less than about 120 cP.

8. An emulsion as claimed in claim 1, wherein the hemicellulose hydrolyzate is derived from corn hulls.

9. An emulsion as claimed in claim 1, further comprising an effective amount of a weighting agent.

10. An emulsion as claimed in claim 9, wherein the weighting agent is sucrose acetate isobutyrate.

11. A spray-dried composition comprising an aromatic or volatile essential oil flavorant encapsulated in a material comprising an amount of hemicellulose hydrolyzate and a carrier effective to encapsulate the essential oil flavorant.

12. An emulsion as claimed in claim 1 or a composition as claimed in claim 11, wherein the aromatic or volatile essential oil flavorant is a citrus oil.

13. An emulsion or composition as claimed in claim 12, wherein the citrus oil is selected from the group consisting of orange oil, grapefruit oil, lemon oil, lime oil, and mixtures thereof.

14. An emulsion or composition as claimed in claim 13, wherein the citrus oil is orange oil.

15. An emulsion as claimed in claim 1, or a composition of claim 11, further comprising a food edible acidifying agent.

16. An emulsion or composition as claimed in claim 15, wherein the food edible acidifying agent is citric acid.

17. A method for preparing an aqueous citrus oil emulsion comprising mixing water and hemicellulose hydrolyzate; adding an aromatic or volatile essential oil flavorant; and then emulsifying to produce an emulsion.

18. A product comprising an emulsion as claimed in claim 1 or a composition of claim 11, water, and flavorings.

19. A product as claimed in claim 18, wherein the hemicellulose hydrolyzate comprises about 0.1 to about 0.5 wt% of the total weight of the product.

## Patentansprüche

1. Wässrige Emulsion, die eine Mischung aus Wasser, einem aromatischen oder flüchtigen Aromastoff von ätherischem Öl und eine Menge von Hemicellulosehydrolysat umfasst, um eine stabile Emulsion zu erzeugen.

2. Emulsion nach Anspruch 1, worin der pH der Emulsion etwa 3 bis etwa 4 beträgt.

3. Emulsion nach Anspruch 1, worin das Hemicellulosehydrolysat etwa 1 bis etwa 15 Gew.-% des Gesamtgewichts der Emulsion umfasst.

4. Emulsion nach Anspruch 3, worin das Hemicellulosehydrolysat etwa 3 bis etwa 5 Gew.-% des Gesamtgewichts der Emulsion umfasst.

5. Emulsion nach Anspruch 4, worin das Citrusöl etwa 10 bis etwa 20 Gew.-% des Gesamtgewichts der Emulsion umfasst.

6. Emulsion nach Anspruch 1, worin die Emulsion eine Viskosität von weniger als etwa 150 cP aufweist.

7. Emulsion nach Anspruch 6, worin die Viskosität weniger als etwa 120 cP beträgt.

8. Emulsion nach Anspruch 1, worin das Hemicellulosehydrolysat aus Maisschalen stammt.

9. Emulsion nach Anspruch 1, die weiter eine wirksame Menge eines Beschwerungsmittels umfasst.

10. Emulsion nach Anspruch 9, worin das Beschwerungsmittel Saccharoseacetatisobutyrat ist.

11. Sprühgetrocknete Zusammensetzung, die einen aromatischen oder flüchtigen Aromastoff von ätherischem Öl umfasst, der in einem Stoff verkapselt ist, der eine Menge an Hemicellulosehydrolysat und einen zur Verkapselung des Aromastoffs von ätherischem Öl wirksamen Träger umfasst.

12. Emulsion nach Anspruch 1 oder eine Zusammensetzung nach Anspruch 11, worin der aromatische oder flüchtige Aromastoff von ätherischem Öl ein Citrusöl ist.

13. Emulsion oder Zusammensetzung nach Anspruch 12, worin das Citrusöl aus der Gruppe ausgewählt ist, die aus Orangenöl, Grapefruitöl, Citronenöl, Limettenöl und Mischungen davon besteht.

14. Emulsion oder Zusammensetzung nach Anspruch 13, worin das Citrusöl Orangenöl ist.

15. Emulsion nach Anspruch 1 oder eine Zusammensetzung nach Anspruch 11, die weiter ein in der Nahrung essbares Säuerungsmittel umfasst.

16. Emulsion oder Zusammensetzung nach Anspruch 15, worin das in der Nahrung essbare Säuerungsmittel Citronensäure ist.

17. Verfahren zur Herstellung einer wässrigen Citrusöl-Emulsion, das das Mischen von Wasser und Hemicellulosehydrolysat, das Zugeben eines aromatischen oder flüchtigen Aromastoffs von ätherischem Öl und dann das Emulgieren zur Erzeugung einer Emulsion umfasst.

18. Produkt, das eine Emulsion nach Anspruch 1 oder eine Zusammensetzung nach Anspruch 11, Wasser und Aromastoffe umfasst.

19. Produkt nach Anspruch 18, worin das Hemicellulosehydrolysat etwa 0,1 bis etwa 0,5 Gew.-% des Gesamtgewichts des Produkts umfasst.

## Revendications

1. Emulsion aqueuse comprenant un mélange d'eau, d'un aromatisant d'huile essentielle aromatique ou volatile et d'une quantité d'hydrolisat d'hémicellulose afin de produire une émulsion stable.

2. Emulsion selon la revendication 1, dans laquelle le pH de l'émulsion est d'environ 3 à environ 4.

3. Emulsion selon la revendication 1, dans laquelle l'hydrolisat d'hémicellulose représente environ 1 à environ 15 % en poids du poids total de l'émulsion.

4. Emulsion selon la revendication 3, dans laquelle l'hydrolisat d'hémicellulose représente environ 3 à environ 5 % en poids du poids total de l'émulsion.

5. Emulsion selon la revendication 4, dans laquelle l'huile citrique représente environ 10 à environ 20 % en poids du poids total de l'émulsion.

6. Emulsion selon la revendication 1, dans laquelle l'émulsion a une viscosité inférieure à environ 150 cP.

7. Emulsion selon la revendication 6, dans laquelle la viscosité est inférieure à environ 120 cP.

8. Emulsion selon la revendication 1, dans laquelle l'hydrolisat d'hémicellulose est dérivé de cosses de maïs.

9. Emulsion selon la revendication 1, comprenant en outre une quantité efficace d'agent de pondération.

10. Emulsion selon la revendication 9, dans laquelle l'agent de pondération est de l'isobutyrate d'acétate de sucrose.

11. Composition desséchée par nébulisation comprenant un aromatisant d'huile essentielle aromatique ou volatile encapsulé dans une matière comprenant une quantité d'hydrolisat d'hémicellulose et un support efficace pour encapsuler l'aromatisant d'huile essentielle.

12. Emulsion selon la revendication 1 ou composition selon la revendication 11, dans laquelle l'aromatisant d'huile essentielle aromatique ou volatile est une huile citrique.

13. Emulsion ou composition selon la revendication 12, dans laquelle l'huile citrique est sélectionnée dans le groupe consistant en huile d'orange, huile de pamplemousse, huile de citron, huile de citron vert et des mélanges de celles-ci.

14. Emulsion ou composition selon la revendication 13, dans laquelle l'huile citrique est de l'huile d'orange.

15. Emulsion selon la revendication 1, ou composition selon la revendication 11, comprenant en outre un agent acidifiant comestible alimentaire.

16. Emulsion ou composition selon la revendication 15, dans lequel l'agent acidifiant comestible alimentaire est de l'acide citrique.

17. Procédé de préparation d'une émulsion d'huile citrique aqueuse comprenant le mélange d'eau et d'hydrolisat d'hémicellulose ; l'ajout d'un aromatisant d'huile essentielle aromatique ou volatile ; puis l'émulsification afin de produire une émulsion.

18. Produit comprenant une émulsion selon la revendication 1 ou une composition selon la revendication 11, de l'eau et des essences.

19. Produit selon la revendication 18, dans lequel l'hydrolisat d'hémicellulose représente environ 0,1 à environ 0,5% en poids du poids total du produit.
